# EUROPÄISCHE PATENTSCHRIFT

(11) **EP 3 285 025 B1**
(45) Veröffentlichungstag und Bekanntmachung des Hinweises auf die Patenterteilung: **03.07.2019**
(21) Anmeldenummer: 16184726.4
(22) Anmeldetag: 18.08.2016
(51) Int. Cl.: F25B 15/00, F25B 29/00, F25B 47/02

(54) **ABSORPTIONSWÄRMEPUMPE UND VERFAHREN ZUM BETREIBEN EINER ABSORPTIONSWÄRMEPUMPE**
ABSORPTION HEAT PUMP AND METHOD FOR OPERATING AN ABSORPTION PUMP
POMPE A CHALEUR A ABSORPTION ET SON PROCEDE DE FONCTIONNEMENT

(43) Veröffentlichungstag der Anmeldung: 21.02.2018
(73) Patentinhaber: Bangheri, Andreas, 6230 Brixlegg (AT)
(72) Erfinder: Bangheri, Andreas, 6230 Brixlegg (AT)
(74) Vertreter: Schwan Schorer & Partner mbB

(56) Entgegenhaltungen:
- WO-A1-2010/129949
- CN-A- 102 840 719
- DE-A1- 3 016 532
- DE-A1- 3 129 677
- GB-A- 2 077 407

## Beschreibung

Die vorliegende Erfindung betrifft eine Absorptionswärmepumpe gemäß dem Oberbegriff von Anspruch 1, sowie ein Verfahren zum Betreiben einer solchen Absorptionswärmepumpe.

Eine Absorptionswärmepumpe gemäß dem Oberbegriff von Anspruch 1 ist aus der DE 30 16 532 A1 bekannt.

Bekannte Absorptionswärmepumpen weisen einen Verdampfer auf, der mit einem Fluidkreislauf in Wärmeaustausch steht, der einen Außenluftwärmetauscher aufweist. Über diesen Außenluftwärmetauscher, der zusätzlich einen Ventilator aufweisen kann, wird der Umgebungsluft Wärme entzogen und mittels Absorptionswärmepumpe einem Verbraucher, wie beispielsweise einer Heizungsanlage, zugeführt. Ist allerdings die Umgebungsluft relativ kalt, beispielsweise liegt ihre Temperatur unter 0°C, so entsteht am Außenluftwärmetauscher Reif oder sogar Eis. Der Reif bzw. das Eis wirkt dabei als thermischer Isolator, so dass nach einem solchen Vereisungsprozess nur noch eine stark reduzierte Energieaufnahme aus der Umgebungsluft stattfinden kann. Dies reduziert den Wirkungsgrad der Absorptionswärmepumpe bzw. die Wärmemenge, die die Absorptionswärmepumpe dem Nutzer zuführen kann, deutlich.

Es ist Aufgabe der vorliegenden Erfindung dieses Problem zu lösen.

Dieses Problem wird gelöst durch eine Wärmepumpe gemäß dem Anspruch 1 bzw. durch ein Verfahren zum Betreiben einer Absorptionswärmepumpe gemäß Anspruch 7.

Erfindungsgemäß ist eine Heißgasleitung vorgesehen, die von der Leitung für Kältemitteldampf von dem Kondensator abzweigt, und mit dem Verdampfer so in Fluidverbindung steht, dass sie den Kondensator und das Expansionsventil umgeht, wobei ein Abtauventil in der Heißgasleitung vorgesehen ist, mittels dessen der Durchfluss von Kältemitteldampf durch die Heißgasleitung gesteuert werden kann.

Dies bietet den Vorteil, dass über die Heißgasleitung heißes Kältemittel dem Verdampfer zugeführt werden kann, da das Kältemittel auf diesem Wege nicht durch den Kondensator geführt wird, wo es abgekühlt werden würde. Da der Verdampfer so heißes Kältemittel aufnimmt bzw. aufnehmen kann, kann ein Abtaubetrieb eingeleitet werden, bei welchem der Verdampfer über seine normale Betriebstemperatur aufgeheizt wird, also über die Temperatur, die er dann erreicht, wenn die Absorptionswärmepumpe nicht im Abtaubetrieb gefahren wird. Da der Verdampfer mit einem Fluidkreislauf des zweiten Mediums in Wärmeaustausch steht, der den Außenluftwärmetauscher aufweist, wird auch der Außenluftwärmetauscher über seine normale Betriebstemperatur aufgeheizt und eine Abtauung des Außenluftwärmetauschers findet statt, so dass die isolierende Eisschicht, die die Wärmeaufnahme des Außenluftwärmetauschers behindert, abgetaut wird.

Bei einem erfindungsgemäßen Verfahren zum Betreiben einer Absorptionswärmepumpe in einem zyklischen Kreisprozess ist neben dem Normalbetrieb ein Abtaubetrieb vorgesehen, bei welchem (im Gegensatz zum Normalbetrieb) dem Generator entnommener Kältemitteldampf mindestens teilweise vor dem Kondensator abgezweigt und dem Verdampfer unter Umgebung von Kondensator und Expansionsventil zugeführt wird, um den Verdampfer zu erwärmen. Auch hier ist durch das Abzweigen des vergleichsweise heißen Kältemitteldampfs, der dem Generator entnommen wird, unter dem Verdampfer unter Umgehung von Kondensator und Expansionsventil (was den Kältemitteldampf abkühlen würde) gewährleistet, dass der Verdampfer erwärmt und abgetaut wird.

Bevorzugte Ausführungsformen der vorliegenden Erfindung ergeben sich aus den Unteransprüchen.

Bei der vorliegenden Erfindung ist zur Wärmeabgabe an den Verbraucher ein Verbraucherkreislauf vorgesehen mit einem diesen durchströmenden Fluid. Der Verbraucherkreislauf weist einen Vorlaufanschluss und einen Rücklaufanschluss zum Anschließen einer Wärmeabgabestelle, beispielsweise einer Heizung für ein Gebäude auf, wobei der
Verbraucherkreislauf vom Rücklaufanschluss kommend durch einen zweiten Wärmetauscher des Generators geführt wird, um Wärme von diesem direkt aufzunehmen. Anschließend zweigt sich der Verbraucherkreislauf auf in einen durch den Kondensator geführten Kondensatorzweig und einen durch den Absorber geführten Absorberzweig. Im Kondensatorzweig ist ein Hydraulikabsperrventil vorgesehen, um den Durchfluss des Mediums durch den Kondensatorzweig zu steuern. Der Kondensatorzweig und der Absorberzweig werden vor dem Vorlaufanschluss wieder vereinigt. Dies bietet den Vorteil, dass der Verbraucherkreislauf einerseits durch den Absorberzweig Absorptionswärme vom Absorber aufnehmen kann, die dadurch entsteht, dass im Absorber Kältemittel mit an kältemittelarmer Lösung vereinigt wird. Kältemittel und kältemittelarme Lösung werden in bekannter Weise erzeugt, indem im Generator lösungsmittelreiche Lösung erwärmt und das Kältemittel so aus der lösungsmittelreichen Lösung ausgetrieben wird. Die Aufteilung des Verbraucherkreislaufs in dem Kondensatorzweig und dem Absorberzweig bietet weiterhin den Vorteil, dass über den Kondensatorzweig Kondensationswärme vom im Kondensator kondensierenden Kältemittel aufgenommen und ebenfalls dem Verbraucherkreislauf und somit über den Vorlaufanschluss dem Verbraucher zugeführt werden kann (neben der bereits beschriebenen Absorptionswärme), die über den Absorberzweig dem Absorber entnommen wird.

Bei einer weiteren bevorzugten Ausgestaltung der Erfindung ist der Fluidkreislauf, mittels dessen der Verdampfer über ein zweites Medium im Wärmeaustausch steht, und der Außenluftwärme aufweist, als Solekreislauf ausgebildet, und eine Solepumpe ist vorgesehen, um eine Sole in dem Solekreislauf umzuwälzen. Dies bietet den Vorteil, dass mittels einer Sole, einer wässrigen Lösung von Frostschutzmitteln (z.B. Glykole), besonders effizient Umgebungswärme dem Verdampfer zugeführt werden kann.

Bei einer weiteren bevorzugten Ausgestaltung der vorliegenden Erfindung weist der Außenluftwärmetauscher einen Ventilator auf, mittels dessen der Fluidkreislauf mit einem Außenluftstrom beaufschlagt werden kann, was die Wärmeaufnahme des Außenluftwärmetauschers verbessert.

Bei einer besonders bevorzugten Ausgestaltung der vorliegenden Erfindung ist die Absorptionswärmepumpe nach einem GAX-Verfahren betrieben.

Hierbei ist der Absorber als eine Kombination aus einem Vorabsorber und einem stromabwärts von diesem angeordneten Verbraucherabsorber ausgebildet. Die Absorberzufuhrleitung für Kältemittel und die Absorberzufuhrleitung für kältemittelarme Lösung münden in den Vorabsorber. Eine Leitung für eine kältemittelreiche Lösung, in der eine Lösungspumpe angeordnet ist, verbindet den Verbraucherabsorber mit dem Generator. Der Verbraucherabsorber steht mit dem Verbraucher über einen Wärmetauscher in Wärmeaustausch und der Vorabsorber mit der Leitung für eine kältemittelreiche Lösung.

Vorzugsweise legen der Generator, der Kondensator, das Expansionsventil, der Verdampfer und der Absorber einen Kältemittelkreislauf fest, welcher vom Generator bis zum Absorber von dem Kältemittel und von dem Absorber bis zum Generator von der kältemittelreichen Lösung durchströmt wird. Dies ermöglicht einen zyklischen Kreisprozess.

Bei einer besonders bevorzugten Ausgestaltung der vorliegenden Erfindung ist die Wärmequelle, die zum Erhitzen des Generators ausgebildet ist, um den Kältemitteldampf aus der Lösung auszutreiben, ein Wärmetauscher (nicht zu verwechseln mit dem Außenluftwärmetauscher, der über den Solekreislauf den Verdampfer erwärmt). Dies bietet den Vorteil, dass kein Brennstoff verfeuert oder elektrische Leistung zur Verfügung gestellt werden muss, um die Wärmemenge zur Verfügung zu stellen, die benötigt wird, um den Kältemitteldampf aus der Lösung auszutreiben. Es kann daher ebenfalls Umgebungswärme kostenlos genutzt werden oder Abwärme eines Produktionsbetriebs und es wird allenfalls zusätzlich Energie benötigt, um den Wärmetauscher zu betreiben (beispielsweise für Pumpen oder Regelungseinrichtungen). Auch Solarenergie kann hierzu verwendet werden.

Auch ein Gasbrenner oder ein Ölbrenner kann als Wärmequelle verwendet werden, um den Generator zu erhitzen. Weiterhin kann ein Hybridbetrieb vorgesehen sein, bei welchem beispielsweise ein Brenner und eine Solaranlage (Sonnenkollektoren) den Generator erhitzen und je nach aufgenommener Solarenergie der Brenner mehr oder weniger zum Erhitzen beiträgt. Ein erfindungsgemäßes Verfahren zum Betreiben einer Absorptionswärmepumpe in einem zyklischen Kreisprozess ist in Anspruch 7 offenbart.

Bei einer bevorzugten Ausgestaltung des erfindungsgemäßen Verfahrens wird im Zuge des Verfahrens eine Rotationsgeschwindigkeit eines Ventilators des Außenwärmetauschers gegenüber einem Normalbetrieb der Wärmepumpe reduziert, oder der Ventilator ganz angehalten. Während der Ventilator im Normalbetrieb die Wärmeaufnahme des Außenluftwärmetauschers verbessert, bietet dies im Abtaubetrieb den Vorteil, dass der Außenluftwärmetauscher, der über den Verdampfer nun praktisch aufgewärmt wird, besser abgetaut werden kann, da die Zufuhr von vergleichsweise kalter Außenluft reduziert oder ganz unterbrochen wird.

Bei einer weiteren bevorzugten Ausgestaltung des vorliegenden Verfahrens wird im Abtaubetrieb eine Drehzahl einer Umwälzpumpe, insbesondere einer Solepumpe, die einen Solekreislauf umwälzt, welcher für einen Wärmeübertrag zwischen dem Außenluftwärmetauscher und dem Verdampfer vorgesehen ist, in Abhängigkeit von der thermischen Leistung, die durch die Wärmequelle dem Generator zugeführt wird, gegenüber einem Normalbetrieb geändert, d.h. abgesenkt oder erhöht. Durch ein Absenken wird weniger Wärme aus dem Außenluftwärmetauscher abgeführt und somit die Abtauung insbesondere bei einer eher geringen Wärmezufuhr in den Generator unterstützt. Umgekehrt wird bei einer hohen Wärmezufuhr in den Generator durch eine erhöhte Umwälzgeschwindigkeit der Sole die Abtauung unterstützt.

Vorzugsweise wird im Abtaubetrieb ferner eine Stellung des Expansionsventils, welches die Durchflussmenge des zu expandierenden Kältemittels steuert, so geändert, dass die Durchflussmenge gegenüber einem Normalbetrieb reduziert wird oder das Expansionsventil wird ganz geschlossen. Dies führt dazu, dass weniger Kältemittel expandiert wird, und so mehr heißes Kältemittel für den Abtauprozess unter der direkten Zuführung von heißem Kältemittel zum Absorber, zur Verfügung steht.

Bei einer weiteren bevorzugten Ausgestaltung des erfinderischen Verfahrens wird im Abtaubetrieb eine Stellung einer Lösungsmitteldrossel, welche die Durchflussmenge an kältemittelarmer Lösung, die aus dem Generator abgezogen und dem Absorber zugeführt wird, steuert, so geändert, dass die Durchflussmenge gegenüber einem Normalbetrieb reduziert wird. Dabei kann die Lösungsmitteldrossel gegenüber einem Normalbetrieb um 10-40%, vorzugsweise ungefähr 20%, reduziert werden. Da dann keine Kälteleistung produziert wird, benötigt man einen geringeren Lösungsumlauf.

Vorteilhafterweise wird weiterhin die Leistung einer Wärmequelle zum Austreiben eines Kältemitteldampfes einer Lösung, die sich im Generator befindet, gegenüber einem Normalbetrieb erhöht. Dies bietet den Vorteil, dass die Menge an heißem Kältemittel, welches dem Generator entnommen werden kann, zum Unterstützen der Abtauung erhöht werden kann.

Falls die Leistung der Wärmequelle vor dem Einleiten der Abtauung bereits in einem oder nahe einem für einen Normalbetrieb maximalen Wert liegt, kann es auch notwendig sein, dass diese im Abtaubetrieb reduziert werden muss, um den Kreisprozess stabil halten zu können.

Vorzugsweise wird das Abtauen ausgehend von einem Normalbetrieb dann gestartet, wenn
die Lufteintrittstemperatur des Außenluftwärmetauschers unter einem einstellbaren Grenzwert von 3 bis 10°C, vorzugsweise unter ungefähr 7°C liegt, und mindestens eine der folgenden Bedingungen erfüllt sind:eine Soleeintrittstemperatur, mit welcher Sole in den Außenluftwärmetausche eintritt, oder die Soleaustrittstemperatur, mit welcher Sole aus dem Außenluftwärmetausche austritt, liegt um mehr als einen einstellbaren Grenzwert unter der Lufteintrittstemperatur, mit welcher Luft in den Außenluftwärmetauscher eintritt, was eine reduzierte Wärmeabgabe durch Vereisung anzeigen kann, oderdie Differenz zwischen Soleeintrittstemperatur und Soleaustrittstemperatur unterschreitet einen vorgegebenen Minimalwert,eine Luftaustrittstemperatur des Außenluftwärmetauschers liegt um weniger als einen einstellbaren Grenzwert unter der Lufteintrittstemperatur, was ebenfalls eine reduzierte Wärmeabgabe durch Vereisung anzeigen kann,wobei der jeweilige Grenzwert in einem Bereich von 5 bis 12K einstellbar ist, und vorzugsweise ungefähr 8K ist.

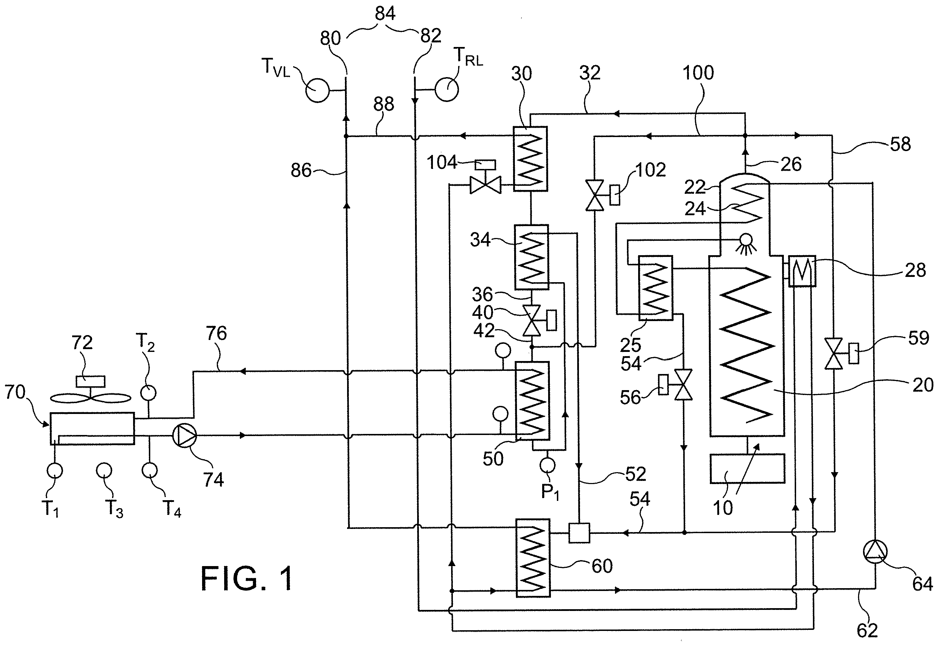

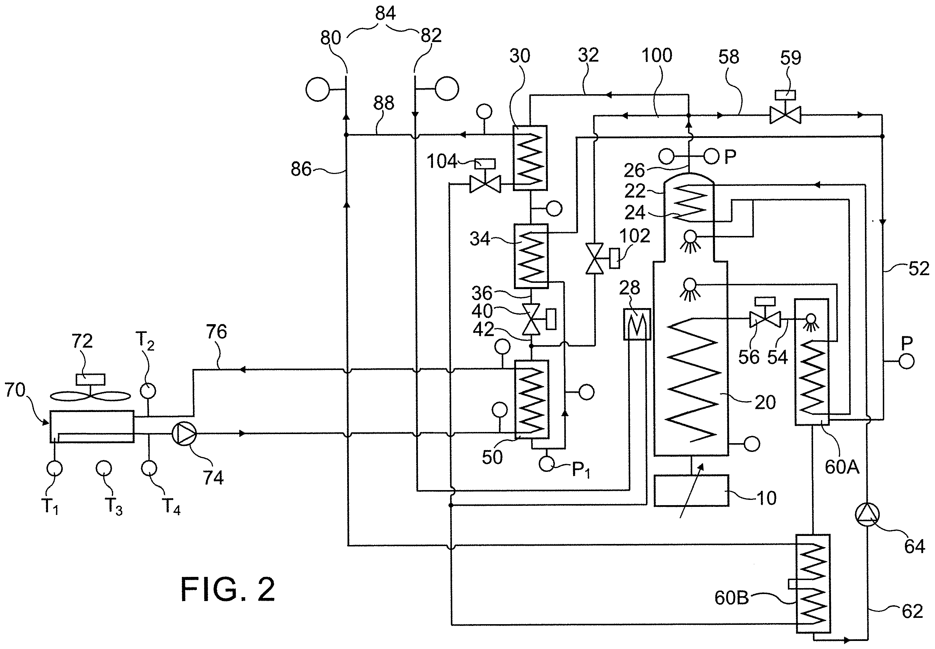

Im Folgenden wird die Erfindung anhand der Figuren 1 und 2 beispielhaft näher erläutert, dabei zeigt:Fig. 1 eine erfindungsgemäße Absorptionswärmepumpe mit einem Absorber; und, Fig. 2 eine Variante mit einem mehrstufigen GAX-Prozess mit zwei Absorbern.

Fig. 1 zeigt eine erfindungsgemäße Absorptionswärmepumpe, die einen einzigen Absorber 60 aufweist. Fig. 2 zeigt eine Absorptionswärmepumpe für einen mehrstufigen Prozess mit zwei Absorbern, nämlich einem Vorabsorber 60A und einem Verbraucherabsorber 60B, die mit einem GAX-Prozess (GAX = Generator/Absorber Heat Exchange). Für gleiche Elemente der Figuren 1 und 2 werden gleiche Bezugszeichen verwendet.

Fig. 1 zeigt eine Absorptionswärmepumpe, die einen Gasbrenner 10, einen Generator 20, einen Kondensator 30, ein Expansionsventil 40, einen Verdampfer 50 und einen Absorber 60 aufweist, die einen zyklischen Kreisprozess ermöglichen. Der Generator 20 beinhaltet eine Lösung, die ein Kältemittel aufweist. Als Kältemittel kann beispielsweise Ammoniak verwendet werden, welches in Wasser gelöst ist.

Der Generator 20 steht mit einer Wärmequelle in Verbindung, die im vorliegenden Fall als Gasbrenner 10 ausgebildet ist, und Wärme dem Generator 20 zuführen kann. Alternativ kann ein Wärmetauscher vorgesehen sein, der Umgebungswärme oder Abwärme aufnehmen und an den Generator 20 abgeben kann. Ein solcher Wärmetauscher kann ferner auch mittels Solarenergie durch Sonnenkollektoren erwärmt werden. Durch die Zufuhr von Wärme an den Generator 20 wird Kältemittel als Kältemitteldampf aus der Lösung ausgetrieben.

Der Kältemitteldampf wird durch diesen Vorgang auf ein Hochtemperaturniveau / Hochdruckniveau gebracht. Aus einem Auslass 26 für Kältemitteldampf wird in einem oberen Bereich des Generators heißer Kältemitteldampf, der auf dem Hochdruckniveau ist, über eine Leitung 32 für Kältemitteldampf einem Kondensator 30 zugeführt und dort kondensiert. Der Kondensator 30 ist dabei als Wärmetauscher ausgeführt und führt einem Kondensatorzweig 88 eines Verbraucherkreislaufs 84 Kondensationswärme zu, welches mittels des Verbraucherkreislaufs 84 einem Vorlaufanschluss 80 zugeführt wird. Am Vorlaufanschluss 80 ist ein nicht näher dargestellter thermischer Nutzer angeschlossen, beispielsweise eine Heizung für ein Gebäude.

Nach dem Durchlaufen des Kondensators 30 und eines Zwischenwärmetauschers 34 wird über eine Leitung 36 für Kältemittelfluid der mindestens teilweise oder vollständig kondensierte Kältemitteldampf durch ein Expansionsventil 40 geführt und expandiert. Nach dem Durchlaufen des Expansionsventils 40 ist das Kältemittelfluid bereits stark abgekühlt und auf ein Niederdruckniveau entspannt. Im Verdampfer 50 wird das Kältemittelfluid nun verdampft und dem Absorber 60 zugeführt.

Dem Absorber 60 ebenfalls zugeführt wird eine kältemittelarme Lösung über eine Absorberzufuhrleitung 54, die aus einem unteren Bereich des Generators 20 diesem vorher entnommen wurde. Im Absorber 60 wird die an Kältemittel verarmte Lösung mit dem Kältemittel, welches den Verdampfer 50 durchlaufen und über die Absorberzufuhrleitung 52 für Kältemittel dem Absorber 60 zugeführt wurde, vereinigt. Die durch die Lösung des Kältemittels in der kältemittelarmen Lösung entstehende Lösungswärme wird dem Austreiberprozess und dem Verbraucher zur Verfügung gestellt (GAX) oder nur an den Verbraucher abgeführt (Non-GAX). Die dabei entstehende an Kältemittel reiche Lösung wird von dem Absorber 60 mittels einer Lösungspumpe 64 erneut dem Generator 20 zugeführt.

Zum Verdampfen des Kältemittels im Verdampfer 50 wird aus der Umgebungsluft Wärme entnommen. Hierzu steht der Verdampfer 50 im Wärmeaustausch mit einem Außenluftwärmetauscher 70, welcher einen Ventilator 72 aufweisen kann. Der Wärmeaustausch zwischen dem Außenluftwärmetauscher 70 und dem Verdampfer 50 erfolgt über einen Solekreislauf 76, in welchem mittels einer Solepumpe 74 eine Sole umgewälzt wird.

Hinter dem Verdampfer 50 und vor dem Zwischenwärmetauscher 34 ist ein Drucksensor P1 angeordnet, welcher der Druck des Kältemittels im diesem Niederdruckbereich (Bereich zwischen Expansionsventil 42 und Generator 20) ermitteln kann. Aus diesem Druck kann eine Temperatur des Kältemittels im Niederdruckbereich direkt hinter dem Verdampfer 60 ermittelt werden.

Die Wärmeabgabe der Absorptionswärmepumpe an den Verbraucher erfolgt in der Ausführungsform der Fig. 1 (Non-GAX), wie bereits erläutert, zum einen über den Kondensatorzweig 88 mittels welchem Kondensationswärme aus dem Kondensator 30 dem Verbraucherkreislauf 84 zugeführt wird. Als weitere Wärmequelle dient der Absorber 60, mittels welchem Lösungswärme der Absorption des Kältemittels durch das Lösungsmittel einem Absorberzweig 86 ebenfalls dem Verbraucherkreislauf 84 zugeführt wird, und somit ebenfalls dem Verbraucher. Hierzu verzweigt sich der Verbraucherkreislauf 84 von einem Rücklaufanschluss 82 vom Verbraucher kommend in den Absorberzweig 86 und den Kondensatorzweig 88 auf, wobei beide Zweige vor dem Vorlaufanschluss 80 wieder zu einem einzigen Abschnitt des Verbraucherkreislaufs 84 vereinigt werden.

Vor der Verzweigung des Verbraucherkreislaufs 84 in den Absorberzweig 86 und den Kondensatorzweig 88 wird der Verbraucherkreislauf 84 durch einen zweiten Wärmetauscher 28 geführt, der in einem oberen Bereich des Generators 20, also einem vergleichsweise warmen Bereich, angeordnet ist, um das kalte Heizmittel, welches durch den Rücklaufanschluss 82 vom Verbraucher zurück kommt, vorzuwärmen.

Wie bereits erläutert, wird aus dem Absorber 60 eine kältemittelreiche Lösung entnommen und über die Leitung 62 für kältemittelreiche Lösung und die Lösungsmittelpumpe 64 wieder dem Generator 20 zugeführt. Hierzu durchläuft die kältemittelreiche Lösung zunächst über einen Wärmetauscher 24 einen Rektifikator 22 des Generators 20. Bevor die kältemittelreiche Lösung endgültig in einen oberen Bereich des Generators 20 in diesen eingespritzt wird, durchläuft sie noch einen weiteren Wärmetauscher 25, in welchem ein Wärmeaustausch mit der aus dem unteren Bereich des Generators abgezogenen kältemittelarmen Lösung (die über die Absorberzufuhrleitung 54 dem Absorber 60 zugeführt wird) steht, um die kältemittelreiche Lösung vorzuwärmen (non GAX Kreislauf der Fig. 1)

In der Absorptionswärmepumpe ist ferner ein Zwischenwärmetauscher 34 vorgesehen, der von dem verdampften Kältemittel, welches dem Verdampfer entnommen wurde, durchströmt wird, bevor dieses durch die Absorberzufuhrleitung 52 für Kältemittel dem Absorber 60 zugeführt wird. Im Zwischenwärmetauscher 34 findet ein Wärmeaustausch mit kondensiertem Kältemittel statt, welches vor dem Zwischenwärmetauscher 34 dem Kondensator 30 entnommen und nach dem Zwischenwärmetauscher 34 dem Expansionsventil 40 zugeführt wird. Im Zwischenwärmetauscher 34 wird daher Wärme vom kondensierten Kältemittel oder Kältemittelfluid auf das verdampfte Kältemittel übertragen.

In den wesentlichen Punkten läuft der Prozess entsprechend der Fig. 2 bzw. der Absorptionswärmepumpe der Fig. 2 gleich ab wie beim Non-GAX-Kreislauf der Fig. 1. Der wesentliche Unterschied beim GAX-Prozess der Fig. 2 ist die Aufteilung des Absorbers 60 der Fig. 1 und 2, nämlich in den Vorabsorber 60A und den Verbraucherabsorber 60B beim GAX-Prozess der Fig. 2. Während beim einstufigen Non-GAX-Prozess entsprechend der Fig. 2 Lösungswärme, die im Absorber 60 frei wird, im Wesentlichen nur dem Verbraucher über den Absorberzweig 86 und dem Verbraucherkreislauf 84 zugeführt wird, wird beim zweistufigen GAX-Prozess entsprechend der Fig. 2 Lösungswärme, die im Verbraucherabsorber 60B generiert wird, ebenfalls dem Verbraucher zugeführt, Lösungswärme, die im Vorabsorber 60A generiert wird, jedoch überwiegend dem Generator 20. Hierzu sind Vorabsorber 60A und Verbraucherabsorber 60B hintereinander geschaltet. Die Absorberzufuhrleitung 52 für Kältemittel mündet in den Vorabsorber 60A, in welchem über die Absorberzufuhrleitung 54 für kältemittelarme Lösung eine kältemittelarme Lösung eingespritzt wird. Ebenso wie in der Ausführungsform der Fig. 1 ist bei der GAX-Vorrichtung der Fig. 2 eine Lösungsmitteldrossel 56 in der Absorberzufuhrleitung 54 für kältemittelarme Lösung vorgesehen, um den Fluss von kältearmer Lösung in dem Vorabsorber 60A zu regeln. Bei der Ausführungsform der Fig. 2 findet allerdings im Vorabsorber 60A keine komplette Lösung des Kältemittels im Lösungsmittel statt, sondern ein Gemisch von Kältemittel und Lösung wird an den Verbraucherabsorber 60B weitergeleitet und erst dort findet die praktisch vollständige Lösung (bzw. die Absorption) des Kältemittels in der Lösung statt. Wie bei der Ausführungsform der Fig. 1 ist der Absorberzweig 86 durch den Absorber, hier durch den Verbraucherabsorber 60B, geführt. Durch den Vorabsorber 60A wird bereits ein Teil oder mindestens ein Teil des im Vorabsorber 60A entstehenden lösungsmittelreiche Lösung direkt in den Generator 20 eingespritzt, sodass Lösungswärme dem Generator 20 zugeführt wird, da dieser Teil der lösungsmittelreichen Lösung nicht im Wärmeaustausch mit dem Verbraucherkreislauf 84 steht.

So wie bei der Ausführungsform der Fig. 1 als auch der Fig. 2 kann in einem normalen Betrieb der jeweiligen Wärmepumpe der Außenluftwärmetauscher 70 vereisen, wenn die Außenlufttemperatur T3 relativ kalt ist, beispielsweise unter 0°C liegt. In diesem Fall entsteht Reif oder Eis im Bereich des Außenluftwärmetauschers, was zunächst durch die Zustandsänderung vom flüssigen zum festen Zustand der niedergeschlagenen Luftfeuchtigkeit latent Energie freisetzt. Ist der Vereisungsprozess abgeschlossen, so findet eine stark reduzierte Energieaufnahme statt, da das Eis als Isolator wirkt.

Um dem entgegenzuwirken, ermöglichen die Absorptionswärmepumpen gemäß der vorliegenden Erfindung ein Abtauverfahren, mittels welchem eine Eisschicht vom Außenluftwärmetauscher entfernt werden kann. Hierzu ist bei beiden Ausführungsformen gemäß Fig. 1 und Fig. 2 eine Heißgasleitung 100 vorgesehen, welche vom oberen Bereich des Generators von der Leitung 32 für Kältemitteldampf abzweigt und so heißes Kältemittel unter Umgehung des Kondensators 30, des Zwischenwärmetauschers 34 und des Expansionsventils 40 direkt dem Verdampfer zuführt und diesen aufheizt. Ein Auftauventil 102 ist vorgesehen, um den Strom von heißem Kältemittel durch die Heißgasleitung 100 steuern zu können.

Sobald nun eine Vereisung des Außenluftwärmetauschers 70 bevorsteht oder bereits eingetreten ist, kann daher das Abtauventil 102 mindestens teilweise wieder geöffnet werden, und heißes Kältemittel strömt direkt in den Verdampfer 50. Zur Unterstützung des Abtauprozesses kann ferner ein Hydraulikabsperrventil 104 mindestens teilweise oder ganz geschlossen werden, welches im Verbraucherkreislauf 84 und hier vorteilhafterweise im Kondensatorzweig 88 angeordnet ist und so den Strom vom Heizmittel durch den Kondensator 30 herunterregelt oder unterbricht. Dadurch wird dem Kältemittel im Bereich des Kondensators 30 weniger oder keine Wärme entzogen, was ebenfalls zu einer im Vergleich zum Normalbetrieb starken Erwärmung des Verdampfers und indirekt auch des Außenluftwärmetauschers 70 führt. Vorzugsweise wird bei dem Abtauprozess auch die Rotationsgeschwindigkeit des Ventilators 72 erniedrigt oder dieser ganz gestoppt, um die Anströmung von kalter Außenluft auf den abzutauenden Außenluftwärmetauscher 70 zu reduzieren. Weiterhin kann die Drehzahl der Solepumpe 74 reduziert werden, damit die Sole stärker aufgeheizt wird,

Es ergibt sich folgender Prozessablauf:
1. Wärmepumpe ist in Regelbetrieb.
2. Falls Lufteintrittstemperatur T3 < 7 °C (Einstellbereich + 10 °C bis + 3 °C) und
3. Soleeintrittstemperatur T2 oder Luftaustrittstemperatur T1 besitzt einen größeren Temperaturunterschied zur Lufteintrittstemperatur T3 als 8 K (Einstellbereich 5 bis 12 K)
   Einleitung Abtauung
4. Hydraulikabsperrventil 104 wird mindestens teilweise geschlossen
5. Rotationsgeschwindigkeit Ventilator 72 wird reduziert oder Ventilator angehalten
6. Drehzahl Solepumpe 74 wird reduziert, vorzugsweise so, dass eine Soleaustrittstemperatur T4 aus dem Außenluftwärmetauscher mindestens einen Mindestwert von 3 °C erreicht, oder dass
   sich ein Temperaturunterschied zwischen eintretender Sole und austretender Sole von mindestens 5 K einstellt
7. Abtauventil 102 öffnet und Heißgas strömt in den Verdampfer, Öffnungswinkel des Abtauventils 102 entspricht im Wesentlichen dem des Expansionsventils 40
8. Expansionsventil 40 schließt
9. Lösungsmitteldrossel 56 schließt um 20% des vorherigen Wertes.
10. Brennerleistung wird erhöht, vorzugsweise auf ungefähr 10 kW
11. Temperatur im Niederdruckbereich nach Verdampfer wird mittels Lösungsmitteldrossel 56 auf T2 oder T4 + 2 K gehalten.
12. Abtauende wenn Soleaustrittstemperatur T4 einen einstellbaren Wert erreicht hat, vorzugsweise +6 °C (einstellbar + 1 °C bis + 10 °C)
13. Wärmepumpenbrenner Aus.
14. Hydraulikabsperrventil 104 öffnet.
15.Abtauventil 102 schließt.
16. Lösungsmitteldrossel 56 und Expansionsventil 40 werden in den Normalmodus geschalten
17.Abschaltung der Wärmezufuhr durch Wärmequelle in den Generator 20 für festgelegte Dauer (ca. 3 Minuten).
18. Wenn die Temperatur im Niederdruckbereich nach dem Verdampfer 10 K unter T2 oder unter T4 ist und kleiner oder gleich 0 °C:
   Start des Brenners und Heizbetrieb.

### Bezugszeichenliste

- 10: Wärmetauscher
- 20: Generator
- 22: Rektifikator
- 24: Wärmetauscher
- 25: Wärmetauscher
- 26: Auslass für Kältemitteldampf
- 28: zweiter Wärmetauscher
- 30: Kondensator
- 32: Leitung für Kältemitteldampf
- 34: Zwischenwärmetauscher
- 36: Leitung für Kältemittelfluid
- 40: Expansionsventil
- 42: Leitung für expandierten Kältemitteldampf
- 50: Verdampfer
- 52: Absorberzufuhrleitung für Kältemittel
- 54: Absorberzufuhrleitung für kältemittelarme Lösung
- 56: Lösungsmitteldrossel
- 58: Dampfbypassleitung
- 59: Kesselbetriebsventil
- 60: Absorber
- 60A: Vorabsorber
- 60B: Verbraucherabsorber
- 62: Leitung für reiche Lösung
- 64: Lösungspumpe
- 44: Leitung für reiche Lösung
- 70: Außenluftwärmetauscher
- 72: Ventilator
- 74: Solepumpe
- 76: Solekreislauf
- 80: Vorlaufanschluss
- 82: Rücklaufanschluss
- 84: Verbraucherkreislauf
- 86: Absorberzweig
- 88: Kondensatorzweig
- 100: Heißgasleitung
- 102: Abtauventil
- 104: Hydraulikabsperrventil

- T1: Luftaustrittstemperatur des Außenluftwärmetauschers
- T2: Temperatur der in den Außenluftwärmetauscher eintretenden Sole
- T3: Lufteintrittstemperatur des Außenluftwärmetauschers
- T4: Temperatur der aus dem Außenluftwärmetauscher austretenden Sole

- P1: Drucksensor Niederdruckbereich zur Berechnung der Temperatur im Niederdruckbereich

## Patentansprüche

1. Absorptionswärmepumpe mit:
einem Generator (20), der zur Aufnahme einer ein Kältemittel enthaltenden Lösung ausgebildet ist,
einer Wärmequelle, der zum Erhitzen des Generators (20) ausgebildet ist, um einen Kältemitteldampf aus der Lösung auszutreiben,
einem Auslass (26), der an einem oberen Bereich des Generators angeordnet ist, um Kältemitteldampf aus dem Generator zu entnehmen,
einer Leitung (32) für Kältemitteldampf, welche den Auslass mit
einem Kondensator (30) in Fluidverbindung verbindet, welcher zum Abkühlen gegen einen Verbraucher und zum daraus resultierenden mindestens teilweisen Kondensieren des Kältemittedampfs vorgesehen ist, um ein Kältemittelfluid zu erhalten,
einem Expansionsventil (40) welches zum Expandieren des Kältemittelfluids ausgebildet und eingangsseitig mit dem Kondensator über eine Leitung (36) für Kältemittelfluid verbunden ist, sowie ausgangsseitig über eine Leitung (42) mit einem
Verdampfer (50) zum mindestens teilweisen Verdampfen des expandierten Kältemittelfluids gegen ein Medium, welcher ausgangsseitig über eine Absorberzufuhrleitung (52) für Kältemittel mit mindestens
einem Absorber (60, 60A, 60B) in Verbindung steht, der zum Absorbieren des expandierten Kältemittelfluids durch eine kältemittelarme Lösung vorgesehen ist, wobei der Absorber weiterhin mit einer Absorberzufuhrleitung (54) für kältemittelarme Lösung mit dem Generator verbunden ist, mittels derer aus einem unteren Bereich des Generators die kältemittelarme Lösung aus diesem abgezogen werden kann, um eine kältemittelreiche Lösung zu erzeugen, die dem Generator zugeführt wird, wobei der Absorber mit dem Verbraucher in Wärmeaustausch steht, um erzeugte Lösungswärme dem Verbraucher zuzuführen, wobei
eine Heißgasleitung (100) vorgesehen ist, die von der Leitung (32) für Kältemitteldampf vor dem Kondensator (30) abzweigt und mit dem Verdampfer (50) so in Fluidverbindung steht, dass sie den Kondensator (30) und das Expansionsventil (40) umgeht, wobei ein Abtauventil (102) in der Heißgasleitung vorgesehen ist, mittels dessen der Durchfluss von Kältemitteldampf durch die Heißgasleitung gesteuert werden kann, wobei zur Wärmeabgabe an den Verbraucher ein Verbraucherkreislauf (84) mit einem diesen durchströmenden Fluid vorgesehen ist, mit einem Vorlaufanschluss (80) und einem Rücklaufanschluss (82) zum Anschließen einer Wärmeabgabestelle, wobei der Verbraucherkreislauf durch einen Wärmetauscher (28) des Generators (20) geführt ist, um Wärme von diesem aufzunehmen,
**dadurch gekennzeichnet, dass:**
der Verdampfer (50) mit einem Fluidkreislauf des Mediums in Wärmeaustausch steht, der einen Außenluftwärmetauscher (70) aufweist; und
sich der Verbraucherkreislauf nach dem Wärmetauscher (28) des Generators (20) aufzweigt in einen durch den Kondensator (30) geführten Kondensatorzweig (88) und einen durch den Absorber geführten Absorberzweig (86), wobei ein Hydraulikabsperrventil (104) im Kondensatorzeig vorgesehen ist, um den Durchfluss des Mediums durch den Kondensatorzweig zu steuern, wobei der Kondensatorzweig und der Absorberzweig vor dem Vorlaufanschluss wieder vereinigt werden, und wobei beim Abtauen des Außenluftwärmetauscher (70) mittels des Hydraulikabsperrventils (104) der Durchfluss durch den Kondensatorzweig reduziert oder ganz unterbrochen wird.

2. Absorptionswärmepumpe nach Anspruch 1, **dadurch gekennzeichnet, dass** die Wärmequelle ein Wärmetauscher (10) ist

3. Absorptionswärmepumpe nach Anspruch 2, **dadurch gekennzeichnet, dass** der Fluidkreislauf ein Solekreislauf (76) ist, und eine Solepumpe (74) vorgesehen ist, um eine Sole in dem Solekreislauf umzuwälzen.

4. Absorptionswärmepumpe nach Anspruch 2 oder 3, **dadurch gekennzeichnet, dass** im Außenluftwärmetauscher ein Ventilator (72) vorgesehen ist, zum Beaufschlagen des Fluidkreislaufs mit einem Außenluftstrom.

5. Absorptionswärmepumpe nach einem der vorhergehenden Ansprüche, **dadurch gekennzeichnet, dass** der Absorber als eine Kombination aus einem Vorabsorber (60A) und einem stromabwärts von diesem angeordneten Verbraucherabsorber (60B) ausgebildet ist, wobei die Absorberzufuhrleitung (52) für Kältemittel und die Absorberzufuhrleitung (54) für kältemittelarme Lösung in den Vorabsorber mündet, und eine Leitung (62) für eine kältemittelreiche Lösung, in der eine Lösungspumpe (64) angeordnet ist, den Verbraucherabsorber mit dem Generator (20) verbindet, wobei der Verbraucherabsorber mit dem Verbraucher über einen Wärmetauscher in Wärmeaustausch steht und der Vorabsorber mit der Leitung (62) für ein kältemittelreiche Lösung in Wärmeaustausch steht.

6. Absorptionswärmepumpe nach einem der vorhergehenden Ansprüche, **dadurch gekennzeichnet, dass** der Generator (20), der Kondensator (30), das Expansionsventil (40), der Verdampfer (50) und der Absorber (60) einen Kältemittelkreislauf festlegen, welcher vom Generator bis zum Absorber von dem Kältemittel und vom Absorber bis zum Generator von der kältemittelreichen Lösung durchströmt wird.

7. Verfahren zum Betreiben einer Absorptionswärmepumpe in einem zyklischen Kreisprozess, wobei:
in einem Normalbetrieb:
eine Wärmequelle einen Generator (20) erhitzt, um einen Kältemitteldampf aus einer im Generator beinhalteten Lösung auszutreiben,
in einem oberen Bereich des Generators Kältemitteldampf aus dem Generator entnommen wird,
der entnommenen Kältemitteldampf einem Kondensator (30) zugeführt wird, welcher den Kältemitteldampf unter Wärmeabgabe an einen Verbraucher abkühlt und dabei den Kältemitteldampf mindestens teilweise kondensiert, um ein Kältemittelfluid zu erhalten,
das Kältemittelfluid einem Expansionsventil (40) zugeführt wird, welches das Kältemittelfluid expandiert,
das expandierte Kältemittelfluid einem Verdampfer (50) zugeführt wird zum mindestens teilweisen Verdampfen des expandierten Kältemittelfluids unter Wärmeaufnahme aus einem Medium,
das Kältemittelfluid einem Absorber (60, 60A, 60B) zugeführt wird, wo es von einer kältemittelarme Lösung absorbiert wird, die aus einem unteren Bereich des Generators abgezogen wird, um eine kältemittelreiche Lösung zu erzeugen, die dem Generator zugeführt wird, wobei der Absorber mit dem Verbraucher in Wärmeaustausch steht, sodass erzeugte Lösungswärme dem Verbraucher zugeführt wird; und
in einem Abtaubetrieb:
der dem Generator entnommene Kältemitteldampf mindestens teilweise vor dem Kondensator (30) abgezweigt und dem Verdampfer (50) unter Umgehung von Kondensator (30) und Expansionsventil (40) zugeführt wird, um den Verdampfer zu erwärmen,
wobei die Absorptionswärmepumpe einen Verbraucherkreislauf (84) zur Abgabe von Wärme an einen Verbraucher aufweist und der Verdampfer (50) mit einem Fluidkreislauf des Mediums in Wärmeaustausch steht, der einen Außenluftwärmetauscher (70) aufweist, und
wobei in dem Abtaubetrieb ferner:
mittels eines Hydraulikabsperrventils (104) der Durchfluss durch mindestens einen Abschnitt eines Verbraucherkreislaufs (84), der in Wärmeaustausch mit dem Kondensator (30) der Absorptionswärmepumpe steht, reduziert oder ganz unterbrochen wird, und
ein Durchfluss eines Fluidstroms von Kältemitteldampf durch eine Heißgasleitung (100) durch mindestens teilweises Öffnen eines Abtauventils (102), welches in der Heißgasleitung angeordnet ist, erzeugt wird, wobei der Kältemitteldampf des Fluidstroms in dem Generator (20) mittels einer Wärmequelle aus einer Lösung ausgetrieben und mittels der Heißgasleitung dem Verdampfer (50) unter Umgehung des Kondensators (30) und des Expansionsventils (40) zuführt wird.

8. Verfahren gemäß Anspruch 7, wobei im Zuge des Verfahrens eine Rotationsgeschwindigkeit eines Ventilators (72) des Außenluftwärmetauschers (70) gegenüber einem Normalbetrieb der Wärmepumpe reduziert, oder der Ventilator ganz angehalten wird.

9. Verfahren gemäß einem der Ansprüche 7 oder 8, wobei im Zuge des Verfahrens die Drehzahl einer Umwälzpumpe, insbesondere einer Solepumpe (74), die einen Solekreislauf (76) umwälzt, welcher für einen Wärmeübertrag zwischen dem Außenluftwärmetauscher (70) und dem Verdampfer (50) vorgesehen ist, gegenüber einem Normalbetrieb erhöht oder abgesenkt wird.

10. Verfahren gemäß einem der Ansprüche 7 bis 9, wobei im Zuge des Verfahrens eine Stellung des Expansionsventil (40), welches die Durchflussmenge des zu expandierenden Kältemittels steuert, so geändert wird, dass die Durchflussmenge gegenüber einem Normalbetrieb reduziert wird, oder das Expansionsventil ganz geschlossen wird.

11. Verfahren gemäß einem der Ansprüche 7 bis 10, wobei im Zuge des Verfahrens eine Stellung einer Lösungsmitteldrossel (56), welche die Durchflussmenge an kältemittelarmer Lösung, die aus dem Generator (20) abgezogen und dem Absorber (60) zugeführt wird, steuert, so geändert wird, dass die Durchflussmenge gegenüber einem Normalbetrieb reduziert wird.

12. Verfahren gemäß Anspruch 11, wobei die Öffnung der Lösungsmitteldrossel (56) gegenüber einem Normalbetrieb um 10-40%, vorzugsweise um ungefähr 20 % reduziert wird.

13. Verfahren gemäß einem der Ansprüche 7 bis 12, wobei im Zuge des Verfahrens eine Leistung einer Wärmequelle zum Austreiben eines Kältemitteldampfes aus einer Lösung die sich im Generator (20) befindet, vorgesehen ist, gegenüber einem Normalbetrieb erhöht oder abgesenkt wird.

14. Verfahren gemäß einem der Ansprüche 7 bis 13, wobei das Abtauen ausgehend von einem Normalbertrieb dann gestartet wird, wenn:
die Lufteintrittstemperatur (T3) des Außenluftwärmetauschers unter einem einstellbaren Grenzwert von 3 bis 10°C, vorzugsweise unter ungefähr 7°C liegt,
und mindestens eine der folgenden Bedingungen erfüllt sind:
eine Soleeintrittstemperatur (T2) liegt um mehr als einen einstellbaren Grenzwert unter der Lufteintrittstemperatur, oder
die Differenz zwischen Soleeintrittstemperatur (T2) und Soleaustrittstemperatur (T4) unterschreitet einen vorgegebenen Minimalwert, oder
eine Luftaustrittstemperatur (T1) des Außenluftwärmetauschers liegt um weniger als einen einstellbaren Grenzwert unter der Lufteintrittstemperatur
wobei der jeweilige Grenzwert in einem Bereich von 5 bis 12K einstellbar ist, und vorzugsweise ungefähr 8K ist.

## Claims

1. Absorption heat pump having:
a generator (20) that is configured to receive a solution containing a refrigerant,
a heat source that is configured to heat the generator (20) in order to force a refrigerant vapour out of the solution,
an outlet (26) that is arranged in an upper region of the generator in order to remove refrigerant vapour from the generator,
a line (32) for refrigerant vapour, which connects the outlet to
a condenser (30) in a fluidic connection, said condenser being provided for cooling with respect to a consumer and for the resultant at least partial condensation of the refrigerant vapour, in order to obtain a refrigerant fluid,
an expansion valve (40) that is configured to expand the refrigerant fluid and is connected on the inlet side to the condenser via a line (36) for refrigerant fluid, and on the outlet side, via a line (42), to an
evaporator (50) for at least partially evaporating the expanded refrigerant fluid with respect to a medium, which is connected on the outlet side, via an absorber feed line (52) for refrigerant, to at least
one absorber (60, 60A, 60B) that is provided for absorbing the expanded refrigerant fluid by way of a refrigerant-depleted solution, wherein the absorber is also connected by an absorber feed line (54) for refrigerant-depleted solution to the generator, by means of which the refrigerant-depleted solution can be withdrawn from the generator from the bottom region thereof in order to create a refrigerant-rich solution, which is fed to the generator, wherein the absorber exchanges heat with the consumer in order to feed generated solution heat to the consumer, wherein a hot-gas line (100) is provided, which branches off from the line (32) for refrigerant vapour upstream of the condenser (30) and is fluidically connected to the evaporator (50) such that it bypasses the condenser (30) and the expansion valve (40), wherein a defrost valve (102) is provided in the hot-gas line, by means of which the flow of refrigerant vapour through the hot-gas line can be controlled, wherein, for discharging heat to the consumer, a consumer circuit (84) having a fluid flowing therethrough is provided, having a feed port (80) and a return port (82) for connecting a heat discharge point, wherein the consumer circuit passes through a heat exchanger (28) of the generator (20) in order to pick up heat therefrom,
**characterized in that**:
the evaporator (50) exchanges heat with a fluid circuit of the medium, which has an outside-air heat exchanger (70); and
the consumer circuit branches, downstream of the heat exchanger (28) of the generator (20), into a condenser branch (88) passing through the condenser (30) and an absorber branch (86) passing through the absorber, wherein a hydraulic shut-off valve (104) is provided in the condenser branch in order to control the flow of the medium through the condenser branch, wherein the condenser branch and the absorber branch are united again upstream of the feed port, and wherein, during the defrosting of the outside-air heat exchanger (70), the flow through the condenser branch is reduced or completely interrupted by means of the hydraulic shut-off valve (104).

2. Absorption heat pump according to Claim 1, **characterized in that** the heat source is a heat exchanger (10).

3. Absorption heat pump according to Claim 2, **characterized in that** the fluid circuit is a brine circuit (76), and a brine pump (74) is provided in order to circulate a brine in the brine circuit.

4. Absorption heat pump according to Claim 2 or 3, **characterized in that** a fan (72) is provided in the outside-air heat exchanger in order to apply an outside-air flow to the fluid circuit.

5. Absorption heat pump according to one of the preceding claims, **characterized in that** the absorber is in the form of a combination of a pre-absorber (60A) and a consumer absorber (60B) arranged downstream of the latter, wherein the absorber feed line (52) for refrigerant and the absorber feed line (54) for refrigerant-depleted solution leads into the pre-absorber, and a line (62) for a refrigerant-rich solution, in which a solution pump (64) is arranged, connects the consumer absorber to the generator (20), wherein the consumer absorber exchanges heat with the consumer via a heat exchanger and the pre-absorber exchanges heat with the line (62) for a refrigerant-rich solution.

6. Absorption heat pump according to one of the preceding claims, **characterized in that** the generator (20), the condenser (30), the expansion valve (40), the evaporator (50) and the absorber (60) define a refrigerant circuit through which the refrigerant flows from the generator to the absorber and through which the refrigerant-rich solution flows from the absorber to the generator.

7. Method for operating an absorption heat pump in a cycle, wherein:
in normal operation:
a heat source heats a generator (20) in order to force a refrigerant vapour out of a solution contained in the generator,
refrigerant vapour is removed from the generator in a top region of the generator,
the removed refrigerant vapour is fed to a condenser (30) that cools the refrigerant vapour with heat being discharged to a consumer and in the process at least partially condenses the refrigerant vapour, in order to obtain a refrigerant fluid,
the refrigerant fluid is fed to an expansion valve (40) that expands the refrigerant fluid,
the expanded refrigerant fluid is fed to an evaporator (50) in order to at least partially evaporate the expanded refrigerant fluid with heat being picked up from a medium,
the refrigerant fluid is fed to an absorber (60, 60A, 60B), where it is absorbed by a refrigerant-depleted solution that is withdrawn from a bottom region of the generator, in order to create a refrigerant-rich solution that is fed to the generator, wherein the absorber exchanges heat with the consumer such that the generated solution heat is fed to the consumer; and
in defrost operation:
the refrigerant vapour removed from the generator branches off at least partially upstream of the condenser (30) and is fed to the evaporator (50), bypassing the condenser (30) and expansion valve (40), in order to heat the evaporator,
wherein the absorption heat pump has a consumer circuit (84) for emitting heat to a consumer and the evaporator (50) exchanges heat with a fluid circuit of the medium, which has an outside-air heat exchanger (70), and
wherein, also in defrost operation:
by means of a hydraulic shut-off valve (104), the flow through at least a portion of a consumer circuit (84), which exchanges heat with the condenser (30) of the absorption heat pump, is reduced or completely interrupted, and
a flow of a fluid stream of refrigerant vapour through a hot-gas line (100) is created by at least partially opening a defrost valve (102) that is arranged in the hot-gas line, wherein the refrigerant vapour of the fluid stream is forced out of a solution in the generator (20) by means of a heat source and is fed to the evaporator (50) by means of the hot-gas line, bypassing the condenser (30) and the expansion valve (40).

8. Method according to Claim 7, wherein, during the method, a rotation speed of a fan (72) of the outside-air heat exchanger (70) is reduced compared with normal operation of the heat pump, or the fan is stopped completely.

9. Method according to either of Claims 7 and 8, wherein, during the method, the speed of a circulating pump, in particular a brine pump (74), which circulates a brine circuit (76), which is provided for heat transfer between the outside-air heat exchanger (70) and the evaporator (50), is increased or decreased compared with normal operation.

10. Method according to one of Claims 7 to 9, wherein, during the method, a position of an expansion valve (40), which controls the flow rate of the refrigerant to be expanded, is changed such that the flow rate is reduced compared with normal operation, or the expansion valve is closed completely.

11. Method according to one of Claims 7 to 10, wherein, during the method, a position of a solvent throttle (56), which controls the flow rate of refrigerant-depleted solution that is withdrawn from the generator (20) and fed to the absorber (60), is changed such that the flow rate is reduced compared with normal operation.

12. Method according to Claim 11, wherein the opening of the solvent throttle (56) is reduced by 10-40%, preferably by about 20%, compared with normal operation.

13. Method according to one of Claims 7 to 12, wherein, during the method, an output of a heat source provided for forcing a refrigerant vapour out of a solution located in the generator (20) is increased or decreased compared with normal operation.

14. Method according to one of Claims 7 to 13, wherein the defrosting is started, proceeding from normal operation, when:
the air inlet temperature (T3) of the outside-air heat exchanger is below a settable limit value of 3 to 10°C, preferably below around 7°C,
and at least one of the following conditions is met:
a brine inlet temperature (T2) is below the air inlet temperature by more than a settable limit value, or
the difference between the brine inlet temperature (T2) and brine outlet temperature (T4) drops below a defined minimum value, or
an air outlet temperature (T1) of the outside-air heat exchanger is below the air inlet temperature by less than a settable limit value,
wherein the respective limit value is settable in a range of 5 to 12K, and is preferably around 8K.

## Revendications

1. Pompe à chaleur à absorption, comprenant :
un générateur (20), qui est conçu pour recevoir une solution contenant un agent réfrigérant,
une source thermique, qui est conçue pour chauffer le générateur (20), pour chasser une vapeur d'agent réfrigérant hors de la solution,
une sortie (26), qui est placée sur une zone supérieure du générateur, pour prélever de la vapeur d'agent réfrigérant hors du générateur,
un conduit (32) de vapeur d'agent réfrigérant, lequel relie par liaison fluidique la sortie avec un condensateur (30), lequel est prévu pour refroidir à l'encontre d'un consommateur et pour la condensation au moins partielle qui en résulte de la vapeur d'agent réfrigérant, pour obtenir un agent réfrigérant fluide,
une soupape d'expansion (40) qui est conçue pour l'expansion de l'agent réfrigérant fluide et qui du côté entrée, est reliée avec le condensateur par l'intermédiaire d'un conduit (36) d'agent réfrigérant fluide, ainsi que du côté sortie, via un conduit (42) avec
un évaporateur (50), destiné à faire évaporer au moins partiellement l'agent réfrigérant fluide expansé contre un milieu, lequel du côté sortie est en liaison via un conduit d'alimentation d'absorbant (52) pour agent réfrigérant avec au moins
un absorbeur (60, 60A, 60B) qui est prévu pour absorber l'agent réfrigérant fluide expansé contre une solution pauvre en agent réfrigérant, l'absorbeur étant relié par ailleurs par un conduit d'alimentation d'absorbant (54) pour une solution pauvre en agent réfrigérant avec le générateur, à l'aide duquel à partir d'une zone inférieure du générateur, la solution pauvre en agent réfrigérant peut être soutirée de celle-ci, pour créer une solution riche en agent réfrigérant, qui est alimentée vers le générateur, l'absorbeur se trouvant en échange thermique avec le consommateur, pour alimenter de la chaleur de dissolution générée vers le consommateur,
un conduit de gaz chaud (100) étant prévu, qui dérive du conduit (32) de vapeur d'agent réfrigérant à l'avant du condensateur (30) et qui est en liaison fluidique avec l'évaporateur (50), de sorte à contourner le condensateur (30) et la soupape d'expansion (40), une soupape de dégivrage (102) étant prévue dans le conduit de gaz chaud, à l'aide de laquelle le débit de vapeur d'agent réfrigérant à travers le conduit de gaz chaud peut se commander, pour restituer de la chaleur au consommateur, un circuit de consommateur (84) avec un fluide circulant à travers celui-ci étant prévu, avec un branchement aller (80) et un branchement retour (82), destinés à brancher un point de dégagement de chaleur, le circuit de consommateur étant tiré à travers un échangeur thermique (28) du générateur (20), pour absorber de la chaleur à partir de celui-ci,
**caractérisée en ce que** :
l'évaporateur (50) se trouve en échange thermique avec un circuit fluidique du milieu qui comporte un échangeur thermique d'air extérieur (70) ; et
**en ce que** le circuit de consommateur se ramifie en aval de l'échangeur thermique (28) du générateur (20) en une branche de condensateur (88) tirée à travers le condensateur (30) et une branche d'absorbeur (86) tirée à travers l'absorbeur, une soupape d'arrêt hydraulique (104) étant prévue dans la branche de condensateur, pour commander le débit du milieu à travers la branche de condensateur, la branche de condensateur et la branche d'absorbeur étant de nouveau réunies en amont du branchement aller et lors du dégivrage de l'échangeur thermique d'air extérieur (70), à l'aide de la soupape d'arrêt hydraulique (104), le débit à travers la branche de condensateur étant réduit ou totalement interrompu.

2. Pompe à chaleur à absorption selon la revendication 1, **caractérisée en ce que** la source thermique est un échangeur thermique (10).

3. Pompe à chaleur à absorption selon la revendication 2, **caractérisée en ce que** le circuit fluidique est un circuit de saumure (76) et **en ce qu'**il est prévu une pompe à saumure (74) pour brasser une saumure dans le circuit de saumure.

4. Pompe à chaleur à absorption selon la revendication 2 ou 3, **caractérisée en ce que** dans l'échangeur thermique d'air extérieur est prévu un ventilateur (72), destiné à exposer le circuit fluidique à un courant d'air extérieur.

5. Pompe à chaleur à absorption selon l'une quelconque des revendications précédentes, **caractérisée en ce que** l'absorbeur est conçu sous la forme d'une association d'un pré-absorbeur (60A) et d'un absorbeur de consommateur (60B) placé en aval de celui-ci, le conduit d'alimentation d'absorbant (52) pour l'agent réfrigérant et le conduit d'alimentation d'absorbant (54) pour la solution pauvre en agent réfrigérant débouchant dans le pré-absorbeur et un conduit (62) pour une solution riche en agent réfrigérant dans laquelle débouche une pompe à solution (64) reliant l'absorbeur de consommateur avec le générateur (20), l'absorbeur de consommateur se trouvant en échange thermique avec le consommateur via un échangeur thermique et le pré-absorbeur se trouvant en échange thermique avec le conduit (62) pour une solution riche en agent réfrigérant.

6. Pompe à chaleur à absorption selon l'une quelconque des revendications précédentes, **caractérisée en ce que** le générateur (20), le condensateur (30), la soupape d'expansion (40), l'évaporateur (50) et l'absorbeur (60) définissent un circuit d'agent réfrigérant, lequel est irrigué du générateur à l'absorbeur par l'agent réfrigérant et de l'absorbeur au générateur par la solution riche en agent réfrigérant.

7. Procédé, destiné à faire fonctionner une pompe à chaleur à absorption dans un processus cyclique en circuit fermé :
dans un mode de fonctionnement normal :
une source thermique chauffant un générateur (20) pour chasser une vapeur d'agent réfrigérant hors d'une solution contenue dans le générateur, dans une zone supérieure du générateur, de la vapeur d'agent réfrigérant étant prélevée hors du générateur,
la vapeur d'agent réfrigérant prélevée étant alimentée vers un condensateur (30), lequel refroidit la vapeur d'agent réfrigérant en restituant de la chaleur à un consommateur et en condensant au moins en partie la vapeur d'agent réfrigérant à cet effet, pour obtenir un agent réfrigérant fluide,
l'agent réfrigérant fluide étant alimenté vers une soupape d'expansion (40), laquelle assure l'expansion de l'agent réfrigérant fluide,
l'agent réfrigérant fluide étant alimenté vers un évaporateur (50), pour l'évaporation au moins partielle de l'agent réfrigérant fluide expansé,
en prélevant de la chaleur dans un milieu,
l'agent réfrigérant fluide étant alimenté vers un absorbeur (60, 60A, 60B), dans lequel il est absorbé par une solution pauvre en agent réfrigérant, qui est soutirée d'une zone inférieure du générateur, pour créer une solution riche en agent réfrigérant, qui est alimentée vers le générateur, l'absorbeur se trouvant en échange thermique avec le consommateur, de sorte que de la chaleur de dissolution générée soit alimentée vers le consommateur ; et
dans un mode de décongélation :
la vapeur d'agent réfrigérant prélevée dans le générateur étant au moins partiellement dérivée à l'avant du condensateur (30) et alimentée vers l'évaporateur (50) en contournant le condensateur (30) et la soupape d'expansion (40), pour chauffer l'évaporateur,
la pompe à chaleur à absorption comportant un circuit de consommateur (84), destiné à restituer de la chaleur à un consommateur et l'évaporateur (50) se trouvant en échange thermique avec un circuit fluidique du milieu, qui comporte un échangeur thermique d'air extérieur (70) et
en mode décongélation, par ailleurs :
à l'aide d'une soupape d'arrêt hydraulique (104), le débit étant réduit ou totalement interrompu à travers au moins un tronçon d'un circuit de consommateur (84) qui se trouve en échange thermique avec le condensateur (30) de la pompe à chaleur à absorption et
un débit d'un flux de fluide de vapeur d'agent réfrigérant à travers un conduit de gaz chaud (100) étant généré par une ouverture au moins partielle d'une soupape de décongélation (102), laquelle est placée dans le conduit de gaz chaud, la vapeur d'agent réfrigérant du flux de fluide dans le générateur (20) étant chassée à l'aide d'une source thermique hors d'une solution et à l'aide du conduit de gaz chaud, étant alimentée vers l'évaporateur (50) en contournant le condensateur (30) et la soupape d'expansion (40).

8. Procédé selon la revendication 7, au cours du procédé, une vitesse de rotation d'un ventilateur (72) de l'échangeur thermique d'air extérieur (70) étant réduit par rapport à un mode de fonctionnement normal de la pompe à chaleur ou le ventilateur étant totalement mis à l'arrêt.

9. Procédé selon l'une quelconque des revendications 7 ou 8, au cours du procédé, la vitesse de rotation d'une pompe de circulation, notamment d'une pompe à saumure (74) qui brasse un circuit de saumure (76), lequel est prévu pour un transfert de chaleur entre l'échangeur thermique d'air extérieur (70) et l'évaporateur (50) étant augmentée ou abaissée par rapport à un mode de fonctionnement normal.

10. Procédé selon l'une quelconque des revendications 7 à 9, au cours du procédé, une position de la soupape d'expansion (40), laquelle commande la capacité de débit de l'agent réfrigérant qui doit être expansé étant modifiée de telle sorte que la capacité de débit soit réduite par rapport à un mode de fonctionnement normal ou que la soupape d'expansion soit totalement fermée.

11. Procédé selon l'une quelconque des revendications 7 à 10, au cours du procédé, une position d'un étrangleur de solution (56), laquelle commande la capacité de débit de solution pauvre en agent réfrigérant qui est soutirée hors du générateur (20) et alimentée vers l'absorbeur (60) étant modifiée de telle sorte que la capacité de débit soit réduite par rapport à un mode de fonctionnement normal.

12. Procédé selon la revendication 11, l'ouverture de l'étrangleur de solution (56) étant réduite de 10 à 40 %, de préférence d'environ 20 % par rapport à un mode de fonctionnement normal.

13. Procédé selon l'une quelconque des revendications 7 à 12, au cours du procédé, une puissance d'une source thermique, laquelle est prévue pour chasser une vapeur d'agent réfrigérant hors d'une solution qui se trouve dans le générateur (20) étant augmentée ou diminuée par rapport à un mode de fonctionnement normal.

14. Procédé selon l'une quelconque des revendications 7 à 13, la décongélation étant lancée, à partir d'un mode de fonctionnement normal lors que :
la température d'entrée d'air (T3) de l'échangeur thermique d'air extérieur est inférieure à une valeur limite réglable de 3 à 10 °C, de préférence inférieure à environ 7 °C,
et au moins l'une des conditions suivantes est satisfaite :
une température d'entrée de saumure (T2) est inférieure de plus d'une valeur limite réglable à la température d'entrée d'air ou
la différence en la température d'entrée de saumure (T2) et la température de sortie de saumure (T4) n'atteint pas une valeur minimal prédéfinie ou
une température de sortie d'air (T1) de l'échangeur thermique d'air extérieur est inférieure de moins d'une valeur limite réglable à la température d'entrée d'air,
la valeur limite respective étant réglable dans un ordre de 5 à 12K et de préférence, d'environ 8K.
